# EUROPÄISCHE PATENTANMELDUNG

(11) **EP 1 252 841 A2**
(43) Veröffentlichungstag der Anmeldung: **30.10.2002**
(21) Anmeldenummer: 02009557.6
(22) Anmeldetag: 26.04.2002
(51) Int. Cl.: A47G 19/08

(54) **Vorrichtung zur Halterung und Vorhaltung von gestapelten Tellern zum Einsatz in Fahrzeugen wie Camping-Fahrzeugen, Booten o. dgl.**

(30) Priorität: 26.04.2001 DE 20107185 U
(71) Anmelder: Froli Kunststoffwerk Heinrich Fromme OHG, 33758 Schloss Holte-Stukenbrock (DE)
(72) Erfinder: Fromme, Heinrich, 33758 Scloss Holte-Stukenbrock (DE)
(74) Vertreter: Strauss, H.-J., Dr.

(57) **Zusammenfassung**

Um eine Vorrichtung zur Halterung und Vorhaltung von gestapelten Tellern zum Einsatz in Fahrzeugen wie Camping-Fahrzeugen, Booten o. dgl. bereitzustellen, mit der insbesondere Teller in Wohnmobilen, Caravanen, Booten oder dgl. geräuschlos vorgehalten werden können, ist ein den Tellerstapel (2) umgreifendes Gestell (3) mit Griffen (4) zur Handhabung vorgesehen, das aus zwei ineinander verschieblich und mittels einer Rasteinrichtung (5) gegeneinander festsetzbaren im Aufbau identisch ausgebildeten Winkelelementen (6.1 und 6.2) besteht, wobei die senkrechten Schenkel (7.1 und 7.2) eines jeden Winkelelementes (6.1 bzw. 6.2) an dem Tellerrand anliegen, und die waagerecht verlaufenden Schenkel (8.1 und 8.2) eines jeden Winkelelementes (6.1 bzw. 6.2 ) die Auflagefläche für die Teller bilden.

## Beschreibung

Die Erfindung betrifft eine Vorrichtung zur Halterung und Vorhaltung von gestapelten Tellern zum Einsatz in Fahrzeugen wie Camping-Fahrzeugen, Booten oder dgl..

Bei Fahrzeugen, wie Camping-Fahrzeugen, stellt es immer ein Problem dar, Geschirr in den gegebenen Räumlichkeiten des Fahrzeugs vorzuhalten. Dabei sind beispielsweise aus dem Stand der Technik für Caravane oder Wohnmobile ortsgebundene Halterungen bekannt, in denen Teller derart vorgehalten werden können, dass sie während der Fahrt keine Geräusche entwickeln. Als nachteilig wird es hierbei angesehen, dass die Vorhaltung der Teller nur in bestimmten Schränken vorgenommen werden kann, wobei aufgrund der Gegebenheiten nur eine bestimmte Anzahl von Tellern geräuschlos vorgehalten werden können.

Es ist daher die Aufgabe der Erfindung, vor dem aufgezeigten Stand der Technik, eine Vorrichtung zur Halterung und Vorhaltung von gestapelten Tellern bereitzustellen, mit der insbesondere Teller in Wohnmobilen, Caravanen, Booten oder dgl. geräuschlos vorgehalten werden können.

Diese Aufgabe wird erfindungsgemäß dadurch gelöst, dass die Vorrichtung ein den Tellerstapel umgreifendes Gestell mit Griffen zur Handhabung umfasst, welches aus zwei ineinander verschieblich und mittels einer Rasteinrichtung gegeneinander versetzbaren im Aufbau identisch ausgebildeten Winkelelementen besteht, wobei die senkrechten Schenkel an dem Tellerrand anliegen und die waagerecht verlaufenden Schenkel die Tellerfläche für die Teller bilden. Dadurch ergibt sich ein Tellerhalter, in dem der Tellerstapel sicher vorgehalten werden kann, der aber auch aufgrund seiner Verstellbarkeit an jede Tellergröße anpassbar ist. Der Tellerhalter nimmt einerseits ein geringes Platzvolumen ein und fällt andererseits von seiner Herstellung kostengünstig aus.

In zweckmäßiger Weiterbildung der Erfindung sind die waagerecht verlaufenden Schenkel zinkenartig ineinander steckbar angelegt. Aufgrund dieser Ausbildung wird erreicht, dass sich die gegenüberstehenden Zinken der beiden Winkelelemente ineinander schieben lassen, so dass auf diese Weise eine einfache Verstellbarkeit der Winkelelemente zueinander erreicht wird.

In Weiterbildung weist jeweils einer der Zinken eines Winkelelementes eine Verzahnung auf, die mit einem Rastelement im korrespondierenden Zinken des anderen Winkelelementes zusammenwirkt. Neben der Verschieblichkeit der ineinander gesteckten Zinken ergibt sich durch die Rastelemente auch eine Festlegung der zueinander verschieblichen Zinken. Dabei sind die einzelnen Zinken aus U-förmig gebildeten Profilen geformt, die jeweils ineinander greifend verschieblich ausgebildet sind.

Nach einer besonders vorteilhaften Weiterbildung der Erfindung ist jeweils auf einem der U-förmigen Profile eines jeden Winkelelementes eine Teilstandfläche für den Tellerstapel angeformt, wobei sich die Teilstandflächen in korrespondierender Weise ergänzen. Dadurch ergibt sich trotz der Verstellbarkeit der Winkelelemente zueinander, eine geschlossene Standfläche für einen aufliegenden oder aufgesetzten Tellerstapel.

Die Rasteinrichtung ist dabei derart angeordnet, dass jeweils an der Seitenwandung der U-förmigen Profile, die Rasteinrichtung vorgesehen ist. Hierzu ist zur Betätigung der Rasteinrichtung eine Stellstange in einem separat angeformten Kanal an der Seitenwandung des U-förmigen Profils vorgesehen. Dabei weist die Stellstange an ihrem einen freien Ende ein angeformtes Griffelement zum Verdrehen der Stellstange auf. Durch Betätigen des Griffelementes wird am anderen freien Ende der Stellstange ein zylinderförmiger Bereich mit einem zur Stellstangenachse parallel verlaufenden ausgesparten Flächenbereich verdreht, so dass aufgrund der sich ergebenden Exzentrizität des anderen Endes der Stellstange ein Federelement, welches am U-förmigen Profil angeformt ist, betätigt wird.

Dabei wird in einer ersten Verstelllage der Stellstange das Federelement durch den Flächenbereich entlastet, so dass eine an dem Federelement angeformte Nase aus der Verzahnung zurückspringt, und somit die Verschieblichkeit der zueinander angeordneten Winkelelemente gegeben ist. In einer zweiten Verstelllage des Griffelementes drückt die Mantelfläche des zylinderförmigen Bereichs die Nase in die Verzahnung, so dass in dieser Verstelllage die beiden zueinander verschieblichen Winkelelemente gesperrt sind.

Nach einer besonders vorteilhaften Ausführungsform der Erfindung sind an dem Gestell unverlierbar Gummimatten als Zwischenlagen zwischen den einzelnen Tellern vorgesehen. Dabei weist die einzelne Gummimatte im wesentlichen eine Scheibenform auf, mit einer im Flächenbereich ausgebildeten Wabenstruktur. An der Gummimatte ist jeweils eine Langlochöse angeformt, durch die ein Haltesteg greift, der an dem Winkelelement verrastet ist. Dadurch sind insbesondere die zwischen den einzelnen Tellerflächen liegenden Zwischenlagen, die ein Klappern der Teller untereinander in dem Gestell unterbinden, immer ortsfest mit dem Gestell verbunden. Damit die übereinander angeordneten Gummimatten in dem Gestell nicht ungewollt herausschwenken, wenn das Gestell zusammengefahren ist, sind an der Gummimatte jeweils Ohren angeformt, die sich gegen die senkrechten Schenkel in Abstützung bringen.

Ein Ausführungsbeispiel der Erfindung wird anhand der Figuren 1 bis 9 dargestellt; dabei zeigen:
- Figur 1:: Eine perspektivische Darstellung eines Tellerhalters mit einem Tellerstapel;
- Figur 2:: Eine weitere perspektivische Darstellung des Tellerhalters gemäß der Figur 1 mit den Zwischenlagen;
- Figur 3:: Eine weitere perspektivische Ansicht des Gestells im eingeschobenen Zustand;
- Figur 4:: Eine weitere perspektivische Darstellung des Gestells im ausgezogenen Zustand;
- Figur 5:: Eine Einzelansicht eines Winkelelementes in der Perspektive;
- Figur 6:: Eine weitere perspektivische Unteransicht des Gestells im ausgezogenen Zustand;
- Figur 7:: Eine isolierte Draufsicht auf eine Zwischenlage;
- Figur 8:: Eine perspektivische Darstellung einer Stellstange;
- Figur 9:: Eine isolierte Darstellung, ebenfalls in der Perspektive, eines Haltesteges.

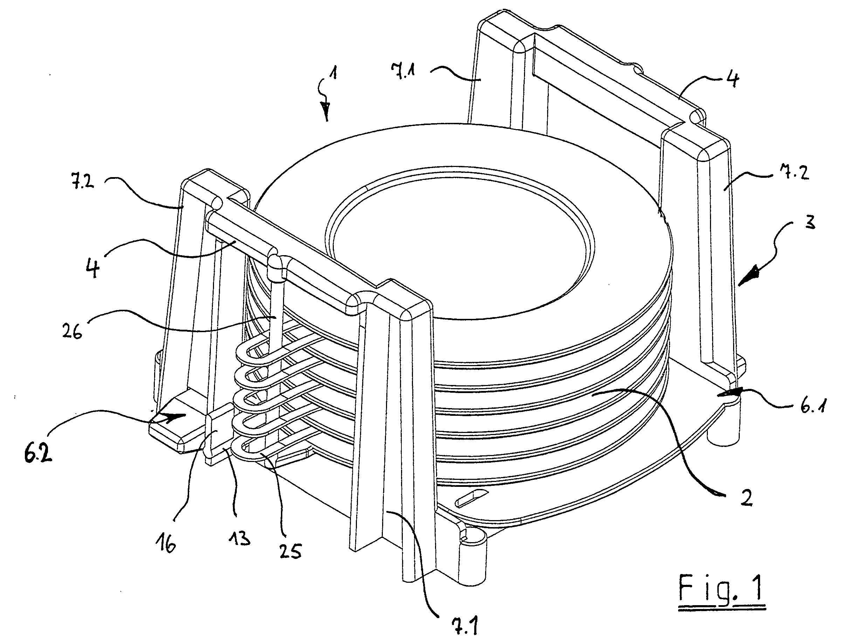

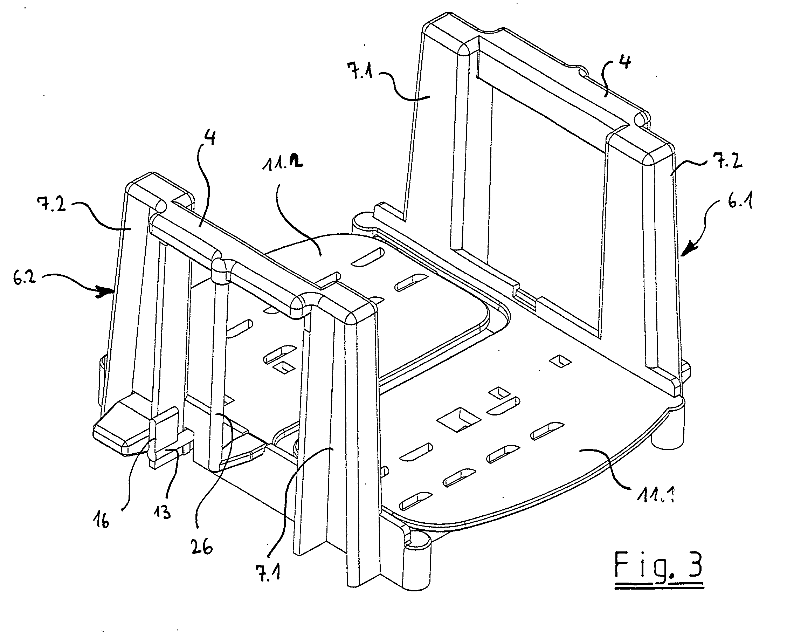

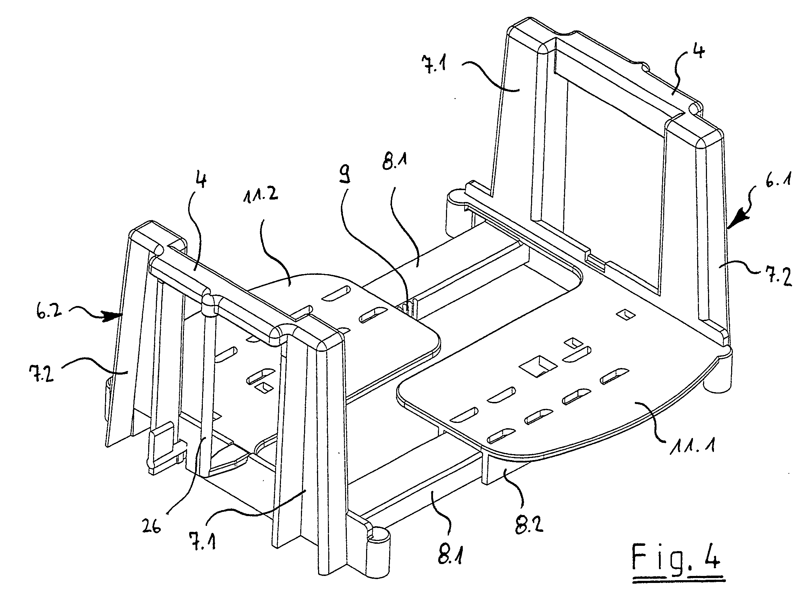

Die Figur 1 zeigt in der Perspektive eine Vorrichtung 1 zur Halterung und Vorhaltung von gestapelten Tellern 2, zum Einsatz in Fahrzeugen, wie Camping-Fahrzeugen, Booten oder dgl.. Dabei zeichnet sich die Vorrichtung 1 durch ein den Tellerstapel 2 umgreifendes Gestell 3 aus, welches mit Griffen 4 zur Handhabung bestückt ist. Das Gestell 3 besteht aus zwei ineinander verschieblich und mittels einer Rasteinrichtung 5 gegeneinander versetzbaren im Aufbau identisch gehaltenen Winkelelementen 6.1 und 6.2. Die Winkelelemente 6.1 bzw. 6.2 bestehen einerseits aus senkrecht angeordneten Schenkeln 7.1, 7.2, die an dem Tellerrand anliegen, und andererseits aus waagerecht verlaufenden Schenkeln 8.1, 8.2, die insbesondere die Auflagefläche, die aus den Teilstandflächen 11.1 und 11.2 besteht, für die Teller 2 bilden. Die waagerecht verlaufenden Schenkel 8.1 und 8.2 sind deutlicher in den Figuren 3, 4 und 5 bzw. 6 zu erkennen.

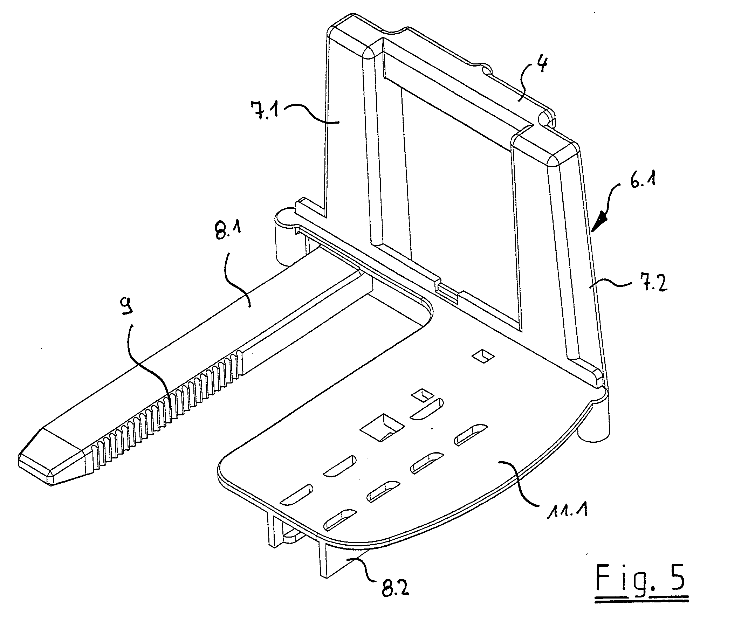

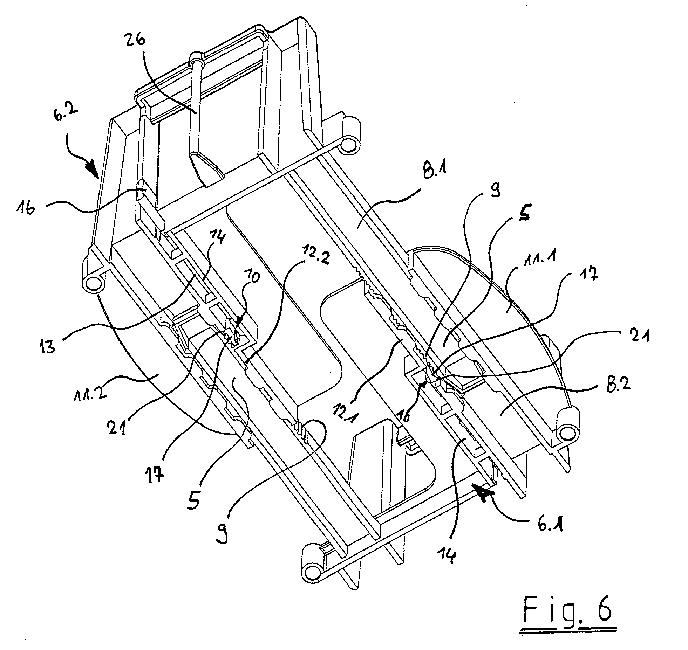

Dabei sind wie insbesondere aus der Figur 5 näher zu erkennen ist, die waagerecht verlaufenden Schenkel 8.1 und 8.2 zinkenartig ausgebildet, wobei die jeweils korrespondierenden Schenkel 8.1, 8.2 des jeweiligen Winkelelementes 6.1 bzw. 6.2. ineinander steckbar angelegt sind. Wie aus der perspektivischen Darstellung der Figur 5, aber auch aus der Unteransicht der Figur 6 zu erkennen ist, weist jeweils einer der Zinken 8.1 eines Winkelelementes 6.1 bzw. 6.2 eine Verzahnung 9 auf, die mit einem Rastelement 10 im korrespondierenden Zinken 8.2 des anderen Winkelelementes 6.2 zusammenwirkt. Dabei sind, wie aus den Perspektiven deutlich zu erkennen ist, die einzelnen Zinken 8.1 und 8.2 aus U-förmig gebildeten Profilen geformt, die jeweils ineinander greifend verschieblich ausgebildet sind.

Wie aus der perspektivischen Darstellung des einzelnen Winkelelementes 6.1 der Figur 5 zu erkennen ist, ist auf jeweils einem der U-förmigen Profile 8.2 eines jeden Winkelelementes 6.1 bzw. 6.2 eine Teilstandfläche 11.1 bzw. 11.2 für den Tellerstapel 2 angeformt, wobei sich die Teilstandflächen 11.1 und 11.2 in korrespondierender Weise ergänzen.

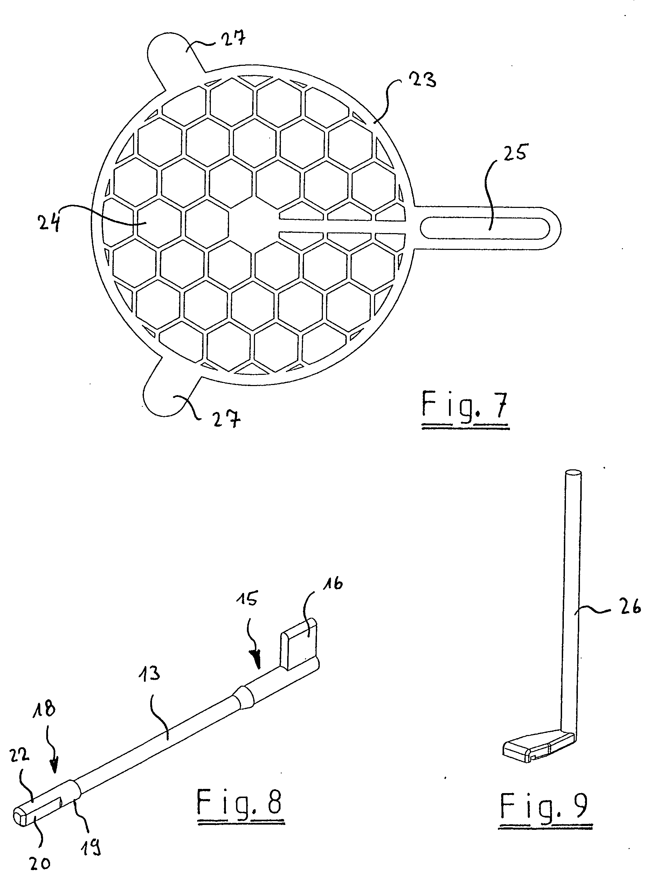

Wie aus der Unteransicht der Figur 6 zu erkennen ist, ist jeweils an der Seitenwandung 12.1 bzw. 12.2 der U-förmigen Profile die Rasteinrichtung 5 angeordnet. Dabei wird die Rasteinrichtung 5 dadurch betätigt, dass eine Stellstange 13 in einem separat angeformten Kanal 14 an der Seitenwandung 12.1 bzw. 12.2 des U-förmigen Profils vorgesehen ist. Die Stellstange 13 ist in der Figur 8 nochmals isoliert dargestellt, wobei in der Perspektive zu erkennen ist, dass die Stellstange 13 an ihrem einen freien Ende 15 ein angeformtes Griffelement 16 zum Verdrehen der Stellstange 13 aufweist, wobei zur Betätigung eines Federelementes 17, wie es in der Unteransicht der Figur 6 zu erkennen ist, an dem anderen freien Ende 18 der Stellstange 13 ein zylinderförmiger Bereich 19 mit einem zur Stellstangenachse parallel verlaufenden ausgesparten Flächenbereich 20 angeformt ist.

Es versteht sich nun von selbst, dass bei Betätigung der Rasteinrichtung 5 in einer ersten Verstelllage des Flächenbereichs 20, das Federelement 17 entlastet wird, wobei eine an dem Federelement 17 angeformte Nase 21 aus der Verzahnung 9 zurückspringt. In einer zweiten Verstelllage drückt die Mantelfläche 22 des zylinderförmigen Bereichs 19 die Nase 21 in die Verzahnung 9. Somit wird gewährleistet, dass auf einfache und schnelle Weise durch Zugriff von außen, das Gestell 3 leicht veränderbar gehalten wird, so dass das Gestell 3 an jede Tellerform schnell und einfach angepasst werden kann, wobei die entsprechenden verschiebbaren Winkelelemente 6.1 und 6.2 jeweils auf die Maße der vorzuhaltenden Teller abgestimmt werden können. Hierzu bedarf es dann nur der Betätigung des Griffelementes 16, um die entsprechende Verstelllage einzurichten.

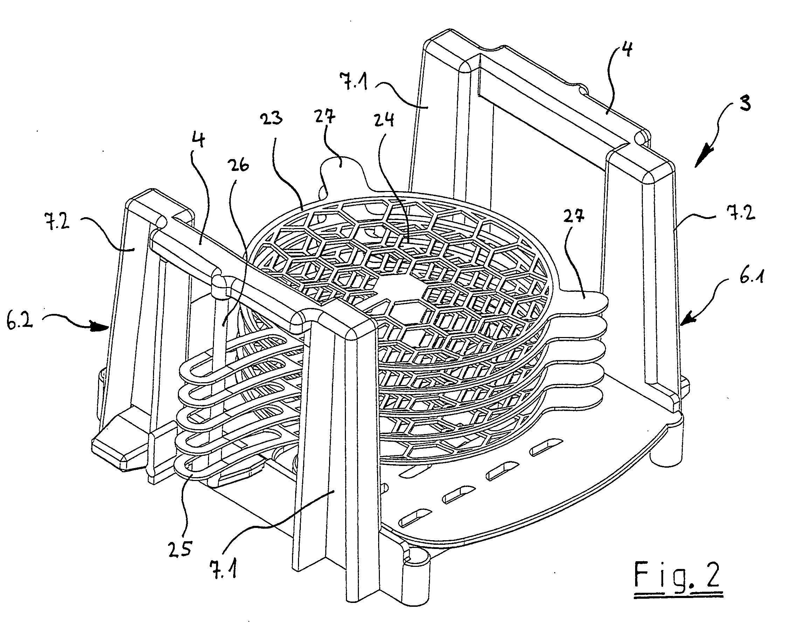

Nach einer besonders vorteilhaften Weiterbildung der Erfindung, wie sie insbesondere in der Figur 2, aber auch in der Figur 7 und 9 dargestellt ist, sind an dem Gestell 3 unverlierbar Gummimatten als Zwischenlagen 23 zwischen den einzelnen Tellern 2 vorgesehen. Die einzelne Gummimatte weist dabei im wesentlichen eine Scheibenform mit einer im Flächenbereich ausgebildeten Wabenstruktur 24 auf. Wie aus der Figur 2 aber auch aus der Figur 7 zu erkennen ist, ist an der Gummimatte eine Langlochöse 25 angeformt, die insbesondere dazu bestimmt ist, dass durch sie ein Haltesteg 26 greifen kann, der in verrasteter Stellung mit dem Gestell 3 in Verbindung steht. Dadurch ergibt sich eine Unverlierbarkeit der Zwischenlagen 23 an dem Gestell 3. In Weiterbildung der Erfindung, wie insbesondere aus der Draufsicht der Figur 7 zu erkennen ist, sind an der einzelnen Zwischenlage 23 Ohren 27.1 und 27.2 angeformt, die insbesondere den Umfang der Scheibenform dahingehend vergrößern, so dass die Zwischenlage 23 angehoben werden kann, um Teller dazwischen zu schieben.

## Patentansprüche

1. Vorrichtung zur Halterung und Vorhaltung von gestapelten Tellern zum Einsatz in Fahrzeugen wie Camping-Fahrzeugen, Booten o. dgl., **gekennzeichnet durch** ein den Tellerstapel (2) umgreifendes Gestell (3) mit Griffen (4) zur Handhabung, welches aus zwei ineinander verschieblich und mittels einer Rasteinrichtung (5) gegeneinander festsetzbaren im Aufbau identisch ausgebildeten Winkelelementen (6.1 und 6.2) besteht, wobei die senkrechten Schenkel (7.1 und 7.2) eines jeden Winkelelementes (6.1 bzw. 6.2) an dem Tellerrand anliegen, und die waagerecht verlaufenden Schenkel (8.1 und 8.2) eines jeden Winkelelementes (6.1 bzw. 6.2 ) die Auflagefläche für die Teller bilden.

2. Vorrichtung nach Anspruch 1, **dadurch gekennzeichnet, dass** die waagerecht verlaufenden Schenkel (8.1 und 8.2) des Winkelelementes (6.1 bzw. 6.2) zinkenartig und ineinander steckbar angelegt sind.

3. Vorrichtung nach Anspruch 2, **dadurch gekennzeichnet, dass** jeweils einer der Zinken (8.1) eines Winkelelementes (6.1 bzw. 6.2) eine Verzahnung (9) aufweist, die mit einem Rastelement (10) im korrespondierenden Zinken (8.2) des anderen Winkelelementes (6.1 bzw. 6.2) zusammenwirkt.

4. Vorrichtung nach Anspruch 3, **dadurch gekennzeichnet, dass** die einzelnen Zinken (8.1 und 8.2) aus U-förmig gebildeten Profilen geformt sind, die jeweils ineinandergreifend verschieblich ausgebildet sind.

5. Vorrichtung nach Anspruch 4, **dadurch gekennzeichnet, dass** auf jeweils einem der U-förmigen Profile eine Teilstandfläche (11.1 bzw. 11.2) für den Tellerstapel (2) angeformt ist, wobei sich die Teilstandflächen (11.1 und 11.2) in korrespondierender Weise ergänzen.

6. Vorrichtung nach Anspruch 5, **dadurch gekennzeichnet, dass** jeweils an der Seitenwandung (12.1 bzw. 12.2) der U-förmigen Profile die Rasteinrichtung (5) angeordnet ist.

7. Vorrichtung nach Anspruch 6, **dadurch gekennzeichnet, dass** zur Betätigung der Rasteinrichtung (5) eine Stellstange (13) in einem separat angeformten Kanal (14) an der Seitenwandung (12.1 bzw. 12.2) des U-förmigen Profils vorgesehen ist.

8. Vorrichtung nach Anspruch 7, **dadurch gekennzeichnet, dass** die Stellstange (13) an ihrem einen freien Ende (15) ein angeformtes Griffelement (16) zum Verdrehen der Stellstange (13) aufweist.

9. Vorrichtung nach Anspruch 8, **dadurch gekennzeichnet, dass** zur Betätigung eines Federelementes (17) an dem anderen freien Ende (18) der Stellstange (13) ein zylinderförmiger Bereich (19) mit einem zur Stellstangenachse parallel verlaufenden ausgesparten Flächenbereich (20) angeformt ist.

10. Vorrichtung nach Anspruch 9, **dadurch gekennzeichnet, dass** in einer ersten Verstelllage der Stellstange (13) der Flächenbereich (20) das Federelement (17) entlastet, so dass eine an dem Federelement (17) angeformte Nase (21) aus der Verzahnung (9) zurückspringt, und wobei in einer zweiten Verstelllage die Mantelfläche (22) des zylinderförmigen Bereichs (19) die Nase (21) in die Verzahnung (9) drückt.

11. Vorrichtung nach einem oder mehreren der Ansprüche 1 bis 10, **dadurch gekennzeichnet, dass** an dem Gestell (3) unverlierbar Gummimatten als Zwischenlagen (23) zwischen den einzelnen Tellern (2) vorgesehen sind.

12. Vorrichtung nach Anspruch 11, **dadurch gekennzeichnet, dass** die einzelne Gummimatte im wesentlichen eine Scheibenform mit einer im Flächenbereich ausgebildeten Wabenstruktur (24) aufweist.

13. Vorrichtung nach Anspruch 12, **dadurch gekennzeichnet, dass** an der Gummimatte eine Langlochöse (25) angeformt ist, durch die ein Haltesteg (26) greift, der an dem Winkelelement (6.1 bzw. 6.2) verrastet ist.

14. Vorrichtung nach Anspruch 13, **dadurch gekennzeichnet, dass** an der Gummimatte Ohren (27.1 und 27.2) angeformt sind, die den Umfang der Scheibenform dahingehend vergrößern, so dass die Zwischenlage (23) angehoben werden kann, um Teller dazwischen zu schieben.
